# EUROPÄISCHE PATENTSCHRIFT

(11) **EP 2 076 736 B1**
(45) Veröffentlichungstag und Bekanntmachung des Hinweises auf die Patenterteilung: **26.05.2010**
(21) Anmeldenummer: 07788061.5
(22) Anmeldetag: 31.07.2007
(51) Int. Cl.: G01D 3/036, G01D 5/24

(54) **SCHALTUNGSANORDNUNG FÜR EIN MIKROMECHANISCHES SENSORELEMENT MIT EINER KONDENSATORANORDNUNG**
CIRCUIT ARRANGEMENT FOR A MICROMECHANICAL SENSOR ELEMENT WITH A CAPACITOR ARRANGEMENT
CIRCUIT POUR UN ELEMENT DE DETECTION MICROMECANIQUE POURVU D'UN DISPOSITIF DE CONDENSATEUR

(30) Priorität: 29.09.2006 DE 102006046403
(43) Veröffentlichungstag der Anmeldung: 08.07.2009
(73) Patentinhaber: Robert Bosch GmbH, 70442 Stuttgart (DE)
(72) Erfinder: SCHATZ, Oliver, 72768 Reutlingen (DE)
(86) Internationale Anmeldenummer: PCT/EP2007/057865
(87) Internationale Veröffentlichungsnummer: WO 2008/040584

(56) Entgegenhaltungen:
- EP-A- 0 263 305
- EP-A- 0 813 047
- US-A1- 2002 067 176

## Beschreibung

### Stand der Technik

Die Erfindung betrifft eine Schaltungsanordnung für ein mikromechanisches Sensorelement mit einer Kondensatoranordnung und einem nachgeschalteten Verstärker für das Nutzsignal der Kondensatoranordnung.

Aus der Praxis sind verschiedenste Realisierungsformen von mikromechanischen Kondensatoranordnungen im Rahmen von Sensorelementen bekannt. Die Bauelementstruktur einer solchen Kondensatoranordnung bestimmt sich im wesentlichen nach dem Verwendungszweck und dem Einsatzort des jeweiligen Sensorelements. Im Fall von dynamischen Drucksensoren und Schallwandlern kommen meist Membranstrukturen zum Einsatz. Die eine Elektrode der Kondensatoranordnung wird hier durch eine mikromechanisch hergestellte Membran gebildet, der gegenüber eine feststehende Gegenelektrode ausgebildet ist. Bei Druck- bzw. Schalleinwirkung wird die Membran deformiert. Dadurch verändert sich ihr Abstand zur Gegenelektrode und damit die Kapazität der aus Membran und Gegenelektrode gebildeten Kondensatoranordnung.

Mikromechanische Sensorelemente werden in großer Stückzahl durch entsprechende Prozessierung von Wafern produziert. Die mechanischen Eigenschaften der bei der Herstellung abgeschiedenen und strukturierten Schichten wirken sich dabei direkt auf die Sensoreigenschaften der erzeugten Bauelemente aus. So kann, beispielsweise durch Stresseintrag im Fertigungsprozess, der Abstand zwischen Elektrode und Gegenelektrode bei "baugleichen" Membransensoren stark schwanken, was zu Unterschieden in der Grundkapazität und damit auch in der Empfindlichkeit führt.

Es sind verschiedene Maßnahmen bekannt, um derartige herstellungsbedingte Qualitätsschwankungen bei der Massenproduktion von mikromechanischen Sensorelementen mit einer Kondensatoranordnung zu vermeiden.

Zunächst wird eine genauere Kontrolle des mikromechanischen Herstellungsprozesses angestrebt. Ergänzend kann ein einheitlicher Qualitätsstandard durch eine Qualitätskontrolle am Ende des Fertigungsprozesses erzielt werden, bei der diejenigen Bauelemente identifiziert und ausgemustert werden, die den Qualitätserfordernissen nicht genügen. In einigen Fällen werden die Qualitätsschwankungen von mikromechanischen Sensorelementen durch einen elektrischen Abgleich des Gesamtprodukts ausgeglichen. Dazu wird die Empfindlichkeit eines Sensorelements einmalig bestimmt und schaltungstechnisch auf einen vorgegebenen Wert eingestellt.

Alle drei vorgenannten Maßnahmen sind relativ kostenintensiv und lassen sich nur schwer mit den Anforderungen einer Massenproduktion vereinbaren.

Aus der EP 0 813 047 A2 ist ein System bekannt, bei dem die Messwerte zweier separater aber ansonsten identischer Drucksensoren miteinander verglichen werden, um eine Drift oder eine Beschädigung zu erkennen. Zur Erfassung der Messwerte wird ein Resonator auf einer Membran angeregt, der in Verbindung mit einem Permanentmagnetfeld eine Frequenzänderung bei der Durchbiegung der Membran erzeugt. Die Anregung des Resonators wird dabei über eine Feedbackschleife gesteuert, bei der die Änderung des Resonator-Signals genutzt wird. Durch diese Aufbereitung der Ansteuerung wird eine stabile Oszillation im Resonator erzeugt.

### Offenbarung der Erfindung

Mit der vorliegenden Erfindung wird eine Schaltungsanordnung vorgeschlagen, mit der sich Sollwert-Abweichungen der Grundkapazität einer Kondensatoranordnung einfach ausgleichen lassen und die zudem einfach auf einem mikromechanischen Sensorelement integriert werden kann.

Dies wird erfindungsgemäß durch Schaltungsmittel erreicht, mit denen ein vom Nutzsignal der Kondensatoranordnung entkoppeltes, aber von der Grundkapazität der Kondensatoranordnung abhängiges Steuersignal erzeugt wird. Dieses Steuersignal wird dann dem Verstärker für das Nutzsignal zum Steuern der Verstärkung zugeführt.

Demnach wird mit der vorliegenden Erfindung vorgeschlagen, den Arbeitspunkt des Sensorelements durch eine geeignete Signalverarbeitung intrinsisch einzustellen. Erfindungsgemäß ist nämlich erkannt worden, dass sich mit einfachen schaltungstechnischen Mitteln parallel zur Erfassung des Nutzsignals auch die Grundkapazität der Kondensatoranordnung bestimmen lässt. Es ist ferner erkannt worden, dass sich die Empfindlichkeit des Sensorelements - zumindest in gewissen Grenzen - ausgehend von der tatsächlichen Grundkapazität der Kondensatoranordnung schaltungstechnisch einfach, durch entsprechende Verstärkung des Nutzsignals einstellen lässt. Damit können der Ausschuss an Sensorelementen sowie die Kosten für eine Qualitätskontrolle und/oder der Aufwand für einen elektrischen Abgleich des Gesamtprodukts deutlich reduziert werden.

Grundsätzlich gibt es verschiedene Möglichkeiten für die Realisierung einer erfindungsgemäßen Schaltungsanordnung sowohl analog als auch digital, wobei besonderer Wert auf die Integrierbarkeit auf einem mikromechanischen Bauelement zu legen ist.

Häufig ist der Kondensatoranordnung eines Sensorelements ein Schaltungsblock nachgeschaltet, der die Kapazität der Kondensatoranordnung in eine proportionale Spannung umwandelt. In einer Ausführungsform der Erfindung ist diesem Schaltungsblock eine Signalverzweigung mit mindestens zwei Ausgangspfaden nachgeschaltet. Bei Anwendungen mit einem relativ hochfrequenten Nutzsignal, wie beispielsweise bei einem Schallwandler, wird das Nutzsignal in einem ersten Ausgangspfad mit Hilfe eines Hochpassfilters aus dem Spannungssignal gewonnen und in einen Verstärker eingespeist. In einem zweiten Ausgangspfad wird ein Steuersignal für diesen Verstärker erzeugt, indem der von der Grundkapazität der Kondensatoranordnung abhängige Gleichspannungsanteil des Spannungssignals bestimmt wird. Dazu wird das Spannungssignal über einen Tiefpassfilter geleitet.

In einer anderen Ausführungsform der Erfindung, die sich auch für Anwendungen mit Nutzsignalen in einem niedrigeren Frequenzbereich eignet, wie beispielsweise für einen dynamischen Drucksensor, sind Mittel zum Anlegen einer Wechselspannung an die Kondensatoranordnung vorgesehen, wobei diese Wechselspannung als Prüfspannung zur Bestimmung der Grundkapazität dient. Wesentlich ist, dass sich der Frequenzbereich der Prüfspannung von dem des Nutzsignals unterscheidet, so dass sowohl der Prüfspannungsanteil als auch das Nutzsignal mit geeigneten Filtern aus dem Ausgangssignal der Kondensatoranordnung extrahiert werden können. Aus dem Prüfspannungsanteil wird dann ein Steuersignal für den Verstärker des Nutzsignals generiert.

### Kurze Beschreibung der Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die den unabhängigen Patentansprüchen nachgeordneten Patentansprüche und andererseits auf die nachfolgende Beschreibung zweier Ausführungsbeispiele der Erfindung anhand der Zeichnungen verwiesen.
- Fig. 1: zeigt eine erste erfindungsgemäße Schaltungsanordnung für ein Sensorelement mit einer Kondensatoranordnung und
- Fig. 2: zeigt eine zweite erfindungsgemäße Schaltungsanordnung für ein Sensorelement mit einer Kondensatoranordnung.

### Ausführungsformen der Erfindung

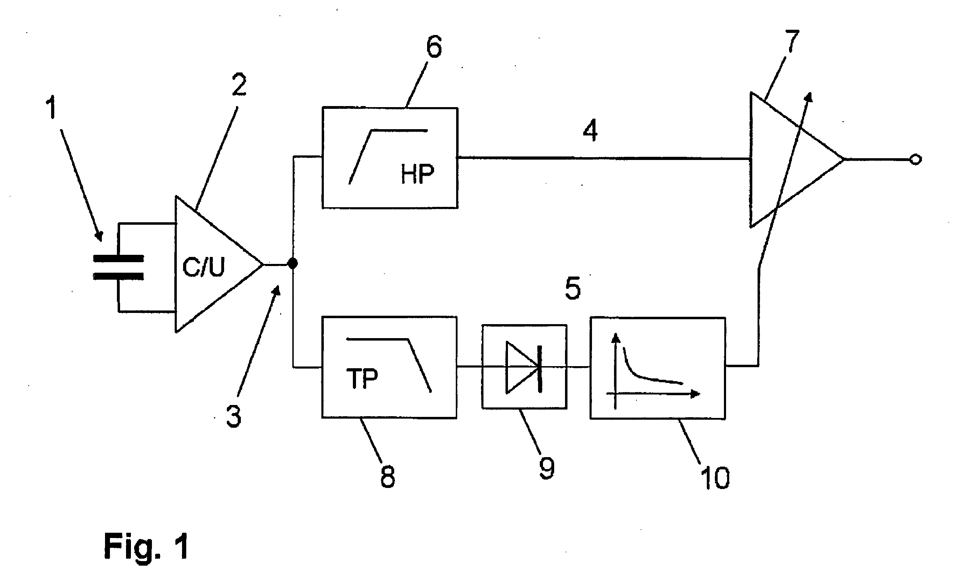

Die in Fig. 1 dargestellte Schaltungsanordnung ist für einen kapazitiven Membransensor konzipiert, der beispielsweise als Schallwandler eingesetzt werden könnte, da hier ein relativ hochfrequentes Nutzsignal zu erwarten ist. Die Kondensatoranordnung 1 wird hier durch eine mikromechanisch realisierte Membran und eine starre Gegenelektrode gebildet. Die Kapazität der Kondensatoranordnung 1 wird durch einen Schaltungsblock 2 in eine proportionale Spannung umgewandelt. Eine nachgeschaltete Signalverzweigung 3 splittet das Spannungssignal in zwei Ausgangspfade 4 und 5 auf. In dem einen Ausgangspfad 4 wird das Spannungssignal über einen Hochpass 6 in einen Verstärker 7 eingespeist, der in seiner Verstärkung steuerbar ist. In dem anderen Ausgangspfad 5 wird ein Steuersignal erzeugt und dem Steuereingang des Verstärkers 7 zugeführt. Dazu wird der von der Grundkapazität der Kondensatoranordnung 1 abhängige Gleichspannungsanteil des Spannungssignals bestimmt, indem das Spannungssignal zunächst über einen Tiefpass 8 geleitet und dann mit einem Gleichrichter 9 gleichgerichtet wird. Der Verstärkungsfaktor für den Verstärker 7 wird dann mit Hilfe einer Kennlinie 10 bestimmt. Der Hochpass 6 und der Tiefpass 8 müssen so dimensioniert werden, dass das Nutzsignal sicher vom Steuersignal entkoppelt wird.

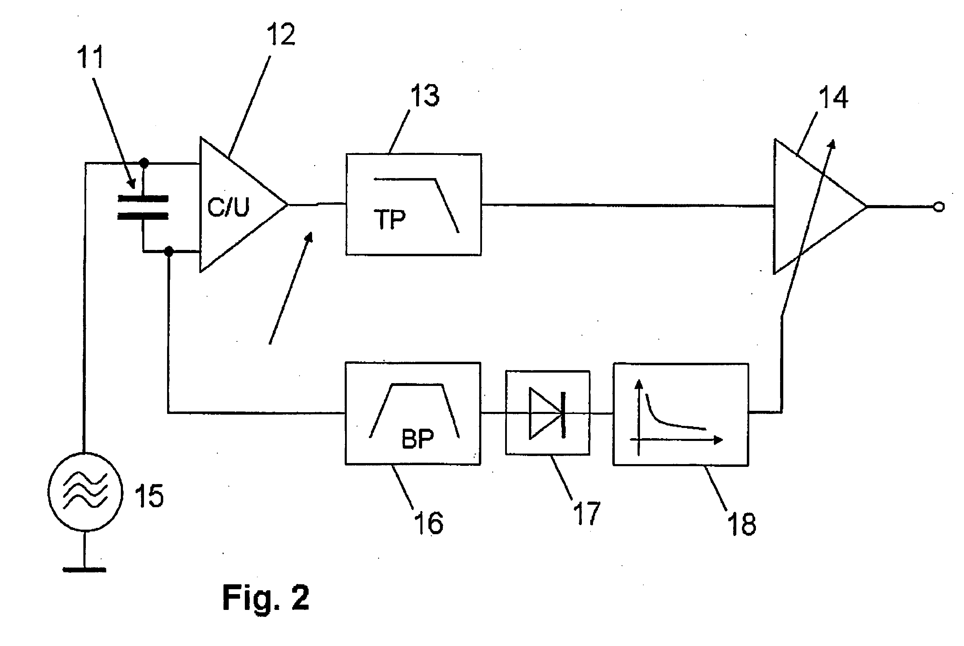

Auch die in Fig. 2 dargestellte Schaltungsanordnung ist für einen kapazitiven Membransensor konzipiert. Die Kapazität der Kondensatoranordnung 11 wird auch hier durch einen Schaltungsblock 12 in eine proportionale Spannung umgewandelt. Diesem Schaltungsblock 12 ist ein Tiefpass 13 nachgeordnet, mit dem das Nutzsignal aus dem Ausgangssignal der Kondensatoranordnung 11 extrahiert wird. Das Nutzsignal wird dann einem steuerbaren Verstärker 14 zugeführt. Im Fall der in Fig. 2 dargestellten Schaltungsanordnung ist die Kondensatoranordnung 11 an eine hochfrequente Prüfspannung 15 angeschlossen, mit deren Hilfe der Wechselstromwiderstand der Kondensatoranordnung 11 und damit deren Grundkapazität ermittelt werden kann. Wesentlich ist hier, dass die Prüfspannung in einem anderen Frequenzbereich liegt als das Nutzsignal. Der Prüfspannungsanteil wird mit Hilfe eines Bandpassfilters 16 aus dem Ausgangssignal der Kondensatoranordnung 11 herausgefiltert. Daraus wird dann ein Steuersignal für den Verstärker 14 erzeugt, indem des Signal durch einen Gleichrichter 17 gleichgerichtet wird und der Verstärkungsfaktor mit Hilfe einer Kennlinie 18 bestimmt wird.

Abschließend sei noch darauf hingewiesen, dass sich mit Hilfe der erfindungsgemäßen Schaltungsanördnung nicht nur die Empfindlichkeit eines mikromechanischen Sensorelements mit einer Kondensatoranordnung gezielt einstellen lässt sondern auch andere Größen gesteuert werden können, wie z.B. der Offset des Sensorelements.

## Patentansprüche

1. Schaltungsanordnung für ein mikromechanisches Sensorelement mit einer Kondensatoranordnung (1; 11) und einem nachgeschalteten Verstärker (7; 14) für das Nutzsignal der Kondensatoranordnung, wobei Schaltungsmittel vorgesehen sind, mit denen ein vom Nutzsignal der Kondensatoranordnung (1; 11) entkoppeltes, aber von der Grundkapazität der Kondensatoranordnung (1; 11) abhängiges Steuersignal erzeugt wird, das dem Verstärker (7; 14) zum Steuern der Verstärkung zugeführt wird,
**gekennzeichnet**
- **durch** einen der Kondensatoranordnung (1) nachgeschalteten Schaltungsblock (2), der die Kapazität der Kondensatoranordnung (1) in eine proportionale Spannung umwandelt, und
- **durch** eine dem Schaltungsblock (2) nachgeschalteten Signalverzweigung (3) mit mindestens zwei Ausgangspfaden (4, 5),
○ so dass das Signal in einem ersten Ausgangspfad (4) über einen Hochpass (6) als Nutzsignal in den Verstärker (7) eingespeist wird und
○ so dass das Signal in einem zweiten Ausgangspfad (5) über einen Tiefpass (8) geleitet wird, um das Steuersignal für den Verstärker (7) zu gewinnen.

2. Schaltungsanordnung für ein mikromechanisches Sensorelement mit einer Kondensatoranordnung (1; 11) und einem nachgeschalteten Verstärker (7; 14) für das Nutzsignal der Kondensatoranordnung, wobei Schaltungsmittel vorgesehen sind, mit denen ein vom Nutzsignal der Kondensatoranordnung (1; 11) entkoppeltes, aber von der Grundkapazität der Kondensatoranordnung (1; 11) abhängiges Steuersignal erzeugt wird, das dem Verstärker (7; 14) zum Steuern der Verstärkung zugeführt wird,
**gekennzeichnet**
- **durch** einen der Kondensatoranordnung (11) nachgeschalteten Schaltungsblock (12), der die Kapazität der Kondensatoranordnung (11) in eine proportionale Spannung umwandelt, die über einen Filter (13) als Nutzsignal in den Verstärker (14) eingespeist wird,
- **durch** Mittel (15) zum Anlegen einer Wechselspannung an die Kondensatoranordnung (11), die als Prüfspannung zur Bestimmung der Grundkapazität dient, und
- **durch** Mittel (16) zum Filtern des Prüfspannungsanteils aus dem Ausgangssignal der Kondensatoranordnung (11) und zum Erzeugen eines Steuersignals für den Verstärker (14) aus diesem Prüfspannungsanteil.

## Claims

1. Circuit arrangement for a micromechanical sensor element with a capacitor arrangement (1; 11) and a downstream amplifier (7; 14) for the useful signal from the capacitor arrangement, provision being made of circuit means which are used to generate a control signal which is decoupled from the useful signal from the capacitor arrangement (1; 11) but is dependent on the basic capacitance of the capacitor arrangement (1; 11) and is supplied to the amplifier (7; 14) in order to control the gain,
**characterized**
- **by** a circuit block (2) which is downstream of the capacitor arrangement (1) and converts the capacitance of the capacitor arrangement (1) into a proportional voltage, and
- by a signal branch (3) which is downstream of the circuit block (2) and has at least two output paths (4, 5),
o with the result that the signal in a first output path (4) is fed into the amplifier (7) as a useful signal via a high-pass filter (6), and
o with the result that the signal in a second output path (5) is passed via a low-pass filter (8) in order to obtain the control signal for the amplifier (7).

2. Circuit arrangement for a micromechanical sensor element with a capacitor arrangement (1; 11) and a downstream amplifier (7; 14) for the useful signal from the capacitor arrangement, provision being made of circuit means which are used to generate a control signal which is decoupled from the useful signal from the capacitor arrangement (1; 11) but is dependent on the basic capacitance of the capacitor arrangement (1; 11) and is supplied to the amplifier (7; 14) in order to control the gain,
**characterized**
- **by** a circuit block (12) which is downstream of the capacitor arrangement (11) and converts the capacitance of the capacitor arrangement (11) into a proportional voltage which is fed into the amplifier (14) as a useful signal via a filter (13),
- by means (15) for applying an AC voltage to the capacitor arrangement (11), which voltage is used as a test voltage for determining the basic capacitance, and
- by means (16) for filtering the test voltage component from the output signal from the capacitor arrangement (11) and for generating a control signal for the amplifier (14) from this test voltage component.

## Revendications

1. Circuit pour élément micromécanique de détection, présentant
un ensemble de condensateur (1; 11) en aval duquel est raccordé un amplificateur (7; 14) du signal utile de l'ensemble de condensateur et
des moyens de circuit qui forment un signal de commande découplé du signal utile de l'ensemble de condensateur (1; 11) mais dépendant de la capacité de base de l'ensemble de condensateur (1; 11) et amené à l'amplificateur (7; 14) pour piloter l'amplification, **caractérisé par**
un bloc de circuit (2) raccordé en aval de l'ensemble de condensateur (1) et qui convertit la capacité de condensateur (1) en une tension proportionnelle et
une bifurcation (3) de signal raccordée en aval du bloc de circuit (2) et présentant au moins deux parcours de sortie (4, 5),
de telle sorte que le signal est injecté dans l'amplificateur (7) par un premier parcours de sortie (4) qui traverse un filtre passe-haut (6) et
que le signal est amené dans un deuxième parcours de sortie (5) qui traverse un filtre passe-bas (8) pour obtenir le signal de commande de l'amplificateur (7).

2. Circuit pour élément micromécanique de détection, présentant
un ensemble de condensateur (1; 11) en aval duquel est raccordé un amplificateur (7; 14) du signal utile de l'ensemble de condensateur et
des moyens de circuit qui forment un signal de commande découplé du signal utile de l'ensemble de condensateur (1; 11) mais dépendant de la capacité de base de l'ensemble de condensateur (1; 11) et amené à l'amplificateur (7; 14) pour piloter l'amplification, **caractérisé par**
un bloc de circuit (12) raccordé en aval de l'ensemble de condensateur (11) et qui convertit la capacité de condensateur (11) en une tension proportionnelle qui est injectée comme signal utile dans l'amplificateur (14) par l'intermédiaire d'un filtre (13),
des moyens (15) qui appliquent sur l'ensemble de condensateur (11) une tension alternative qui sert de tension de test permettant de déterminer la capacité de base et
des moyens (16) de filtration de la partie de tension de test du signal de sortie de l'ensemble de condensateur (11) qui forment un signal de commande de l'amplificateur (14) à partir de cette partie de tension de test.
